# EUROPÄISCHE PATENTSCHRIFT

(11) **EP 1 248 430 B1**
(45) Veröffentlichungstag und Bekanntmachung des Hinweises auf die Patenterteilung: **05.10.2005**
(21) Anmeldenummer: 01108787.1
(22) Anmeldetag: 07.04.2001
(51) Int. Cl.: H04L 29/06

(54) **Verfahren und Generierungsmodul zur Ermittlung von Filtermasken zur Relevanzprüfung von Kennzeichnern**
Method and device for generating filter masks for checking relevance of features
Méthode et dispositif de génération de masques filtrants pour vérifier l'importance de caractéristiques

(43) Veröffentlichungstag der Anmeldung: 09.10.2002
(73) Patentinhaber: Vector Informatik GmbH, 70499 Stuttgart (DE)
(72) Erfinder: Wettstein, Horst.prof.dr.ing., D76227 Karlsruhe (DE); Schelling,Helmut. dr.ing., D-71282 Hemmingen (DE)
(74) Vertreter: Vetter, Hans

(56) Entgegenhaltungen:
- EP-A- 0 993 144
- WO-A-01/20854

## Beschreibung

Die Erfindung betrifft ein Verfahren zur Ermittlung von Filtermasken zur Relevanzprüfung von Kennzeichnern, die einer Kommunikations-Einrichtung über ein Kommunikationsnetz in Nachrichten übermittelbar sind, mit den Schritten:
- Ermitteln von für die Kommunikations-Einrichtung relevanten Relevanz-Kennzeichnern, und
- Ermitteln von für die Kommunikations-Einrichtung irrelevanten Irrelevanz-Kennzeichnern.
Die Erfindung betrifft ferner ein derartiges Generierungsmodul.

In Kommunikationsnetzen werden Nachrichten häufig in sogenannten Broadcast-Verfahren an zahlreiche Ziel-Kommunikations-Einrichtungen versandt. Die empfangenden Ziel-Kommunikations-Einrichtungen müssen dann anhand eines in einer jeweiligen Nachricht enthaltenen, üblicherweise binär codierten Kennzeichners, z.B. einer Ziel- und/oder Quell-Adresse der Nachricht oder eines Kennzeichners für einen Inhalt der Nachricht, ermitteln, ob die Nachricht für sie relevant ist. Typische Beispiele hierfür sind beispielsweise Bussysteme, bei denen die Busteilnehmer alle auf einem Bus übermittelten Nachrichten sozusagen mithören.

Um die Hauptfunktionsbaugruppen einer Kommunikations-Einrichtung, beispielsweise deren Zentralprozessor und/oder zentralen Steuerungsprozess(e), von den Filteraufgaben zu entlasten, sind insbesondere bei Bussystemen bei den für das Senden und Empfangen der Nachrichten zuständigen Sende- und Empfangsmodulen Prüfmittel zur Relevanzprüfung von Kennzeichnern vorgesehen, die anhand von Filtermasken ankommende Kennzeichner auf deren Relevanz prüfen. Wenn ein solcher Kennzeichner einem Vergleich mit einer der Filtermasken standhält, es sich also um einem Relevanz-Kennzeichner handelt, wird die jeweilige Nachricht an die Hauptfunktionsbaugruppe der Kommunikations-Einrichtung weitergereicht und ansonsten verworfen. Prüfmittel, die vorzugsweise in Hardware oder hardwarenaher Software realisiert sind, sind beispielsweise in Sende- und Empfangsmodulen für CAN-Busse (CAN = Controller Area Network), sogenannten CAN-Controllern, vorgesehen, wie offenbart in WO0120854, Seite 13-14. Sie können aber auch in einem für das Senden und Empfangen zuständigen Software-Prozess vorgesehen sein.

Allerdings ist die Anzahl der für die Speicherung der Filtermasken in einem Sende- und Empfangsmodul vorgesehenen Speicherplätze begrenzt, so dass nicht für jeden Relevanz-Kennzeichner eine zugeordnete Filtermaske, beispielsweise mit zu diesen identischem Binärcode, abgelegt werden kann. Ferner wird die Prüfaufgabe aufwändig, wenn eine lange Liste von Filtermasken bei der Überprüfung eines Kennzeichners abgearbeitet werden muss.

Man könnte jeweils mehrere Ausgangs-Filtermasken zu einer Kombinations-Filtermaske zusammenfassen, die für mehrere, den jeweiligen Ausgangs-Filtermasken zugeordnete Relevanz-Kennzeichner passierbar ist. Diejenigen Stellen, an denen sich die jeweiligen Ausgangs-Filtermasken unterscheiden, sind bei einer aus diesen gebildeten Kombinations-Filtermaske als Freistellen oder "Don't-Care"-Stellen markiert. Allerdings sind Kombinations-Filtermasken mit Freistellen häufig auch für Irrelevanz-Kennzeichner durchlässig, so dass für die jeweilige Kommunikations-Einrichtung irrelevante Nachrichten von deren Hauptfunktionsbaugruppe bearbeitet werden müssen.

Es ist daher Aufgabe der vorliegenden Erfindung, eine minimierte Anzahl von Filtermasken zur Relevanzprüfung von Kennzeichnern zu ermitteln, die einer Kommunikations-Einrichtung über ein Kommunikationsnetz in Nachrichten übermittelbar sind, wobei mit den Filtermasken die Irrelevanz-Kennzeichner optimal ausfilterbar sein sollen.

Zur Lösung der Aufgabe sind bei dem eingangs genannten Verfahren die folgenden Schritte vorgesehen:
- Ermitteln jeweils mindestens einer Ausgangs-Filtermaske für jeden Relevanz-Kennzeichner, die für den jeweiligen Relevanz-Kennzeichner passierbar und für die Irrelevanz-Kennzeichner unpassierbar ist,
- Kombinieren von zumindest zwei Ausgangs-Filtermasken zu einer Kombinations-Filtermaske, die für die den jeweiligen Ausgangs-Filtermasken zugeordneten Relevanz-Kennzeichner passierbar ist, und
- Überprüfen der Kombinations-Filtermaske, wobei sie anstelle der ihr jeweils zugrundeliegenden Ausgangs-Filtermasken beibehalten wird, wenn alle Irrelevanz-Kennzeichner mit der Kombinations-Filtermaske ausmaskierbar sind, oder verworfen wird, wenn sie für wenigstens einen Irrelevanz-Kennzeichner passierbar ist.

Zur Lösung der Aufgabe ist ferner ein Generierungsmodul vorgesehen, das mit Mitteln zur Ausführung der Schritte versehen ist.

Die Kombinations-Filtermaske wird nicht mehr oder minder zufällig ermittelt und verwendet, sondern durch systematisches Kombinieren von Ausgangs-Filtermasken und Überprüfen der dabei jeweils entstehenden Kombinations-Filtermaske auf Unpassierbarkeit für die Irrelevanz-Kennzeichner, so dass die Irrelevanz-Kennzeichner nicht nur mit den Ausgangs-Filtermasken, sondern auch mit der Kombinations-Filtermaske optimal ausfilterbar sind.

Zweckmäßige Ausgestaltungen der Erfindung ergeben sich aus den abhängigen Ansprüchen sowie aus der Beschreibung.

Vorteilhaft ist vorgesehen, dass aus Ausgangs-Filtermasken und/oder Kombinations-Filtermasken solange Kombinations-Filtermasken gebildet und nach einer Überprüfung mit den Irrelevanz-Kennzeichnern beibehalten oder verworfen werden, bis mindestens ein vorbestimmtes Abbruchkriterium erreicht ist, insbesondere bis keine Kombinations-Filtermaske mehr gebildet werden kann, die für alle Irrelevanz-Kennzeichner unpassierbar ist oder bis die Anzahl bzw. Summe von Kombinations-Filtermasken und nicht durch solche ersetzten Ausgangs-Filtermasken einen Vorgabewert erreicht. Die Anzahl der Kombinations-Filtermasken und nicht durch solche ersetzten Ausgangs-Filtermasken wird somit minimiert.

Sofern beispielsweise eine gewünschte Anzahl der Kombinations-Filtermasken und nicht durch solche ersetzten Ausgangs-Filtermasken nicht erzielt werden kann, also keine (weitere) für alle Irrelevanz-Kennzeichner unpassierbare Kombinations-Filtermaske gebildet werden kann, ist vorgesehen, dass zumindest eine Kombinations-Filtermaske aus den Ausgangs-Filtermasken und/oder den Kombinations-Filtermasken gebildet und an deren Stelle beibehalten wird, die für wenigstens einen Irrelevanz-Kennzeichner passierbar ist.

Bei einer vorteilhaften Ausgestaltung der obigen Variante wird bei einer Auswahl von mindestens zwei, aus Ausgangs-Filtermaske und/oder Kombinations-Filtermasken gebildeten und für wenigstens einen Irrelevanz-Kennzeichner passierbaren Kombinations-Filtermasken diejenige Kombinations-Filtermaske ausgewählt und beibehalten, die für eine kleinere Anzahl von Irrelevanz-Kennzeichnern passierbar ist und/oder die für Irrelevanz-Kennzeichner passierbar ist, die mit einer geringen Häufigkeitswahrscheinlichkeit in dem Kommunikationsnetz übertragen werden. Somit ist die Beeinträchtigung einer Kommunikations-Einrichtung, die durch die unerwünschte Durchlässigkeit für einen oder mehrere Irrelevanz-Kennzeichner entsteht, möglichst gering.

Zweckmäßigerweise werden für wenigstens einen Irrelevanz-Kennzeichner passierbare Kombinations-Filtermasken nur solange gebildet und beibehalten, bis die Summe von Kombinations-Filtermasken und nicht durch Kombinations-Filtermasken ersetzten Ausgangs-Filtermasken einen Vorgabewert erreicht. Es werden nur so viele für Irrelevanz-Kennzeichner durchlässige Kombinations-Filtermaske gebildet, wie unbedingt erforderlich.

Vorteilhafterweise ist bei einer besonders bevorzugten Variante der Erfindung vorgesehen, dass die Ausgangs-Filtermasken in eine Sequenz eingruppiert werden, dass die Filtermasken der Sequenz schrittweise mit den ihnen in der Sequenz jeweils nachfolgenden Filtermasken zu Kombinations-Filtermasken kombiniert werden und dass die jeweilige Kombinations-Filtermaske anstelle der ihnen jeweils zugrundeliegenden Filtermaske beibehalten wird, wenn sie für alle Irrelevanz-Kennzeichner unpassierbar ist. Prinzipiell sind jedoch auch andere Vorgehensweisen möglich, beispielsweise dass die Kombinations-Filtermasken aus zufällig ausgewählten Ausgangs-Filtermasken gebildet werden.

Bei der schrittweisen Kombination der Filtermasken der Sequenz mit den ihnen in der Sequenz jeweils nachfolgenden Filtermasken ist vorteilhaft vorgesehen, dass vor der Bildung der Kombinations-Filtermasken die Ausgangs-Reihenfolge der Ausgangs-Filtermasken in der Sequenz verändert wird und dass bei einer Auswahl unterschiedlicher Ausgangs-Reihenfolgen eine Ausgangs-Reihenfolge nach einem vorbestimmten Kriterium, insbesondere nach der auf Basis der jeweiligen Ausgangs-Reihenfolge erzielbaren Gesamtzahl von Kombinations-Filtermasken und nicht durch solche ersetzten Ausgangs-Filtermasken, ausgewählt wird. Hierbei werden optimale Filtermasken besonders systematisch ermittelt.

Nicht nur die Anzahl von zur Speicherung von Filtermasken vorgesehenen Speicherplätzen kann beschränkt sein, sondern auch die Größe der einzelnen Speicherplätze. Beispielsweise sind typische Kennzeichner in einem CAN-System 11 Bits lang, während von CAN-Controllern bereitgestellte Speicherplätze (auch Registerplätze genannt) häufig lediglich für 8 Bits ausgelegt sind. Man könnte zwar eine Filtermaske auf zwei Registerplätze aufteilen, so dass eine 11-Bit-Filtermaske vollständig speicherbar ist, würde dabei aber die Anzahl speicherbarer Filtermasken halbieren.

Zur optimalen Nutzung vorhandenen Speicherplatzes ist daher vorgesehen, dass die Ausgangs-Filtermasken mit einer Vormaske zu maskierten Ausgangs-Filtermasken maskiert werden, wobei eine maskierte Ausgangs-Filtermaske mehreren Relevanz-Kennzeichnern zugeordnet und für diese passierbar sein kann und wobei eine maskierte Ausgangs-Filtermaske für einen oder mehrere Irrelevanz-Kennzeichner passierbar sein kann, dass zur Ermittlung der Kombinations-Filtermasken die maskierten Ausgangs-Filtermasken verwendet werden und dass zur Überprüfung auf Unpassierbarkeit der Kombinations-Filtermasken vorzugsweise nur diejenigen Irrelevanz-Kennzeichner verwendet werden, die anhand der der jeweiligen Kombinations-Filtermaske zugrundeliegenden maskierten Ausgangs-Filtermasken ausfilterbar sind.

Es versteht sich, dass anstatt der Maskierung mit der Vormaske auch beispielsweise eine Rechts- und/oder Links-Shift-Operation möglich ist, bei denen z.B. niedrigstwertige bzw. höchstwertige Bits eines Kennzeichners oder eine Filtermaske eliminiert werden. Jedenfalls sind das erfindungsgemäße Verfahren und seine zweckmäßigen Ausgestaltungen auf die maskierten Ausgangs-Filtermasken und die daraus ermittelten Kombinations-Filtermasken ebenso anwendbar wie auf die unmaskierten Ausgangs-Filtermasken bzw. Kombinations-Filtermasken. Zweckmäßigerweise werden für die Überprüfung der (maskierten) Kombinations-Filtermasken mit der Vormaske maskierte Irrelevanz-Kennzeichner verwendet.

Eine maskierte Ausgangs-Filtermaske kann für einen oder mehrere Irrelevanz-Kennzeichner passierbar sein. Wenn eine Kombinations-Filtermaske auf der Basis einer solchen Ausgangs-Filtermaske gebildet wird, ist auch diese nicht geeignet, diese Relevanz-Kennzeichner auszufiltern. Daher ist zweckmäßigerweise vorgesehen, dass die Kombinations-Filtermaske mit diesen Irrelevanz-Kennzeichnern, die bereits deren zugrunde liegende Ausgangs-Filtermaske passieren können, nicht überprüft wird.

Zweckmäßigerweise ist vorgesehen, dass die jeweiligen Irrelevanz-Kennzeichner mit der Vormaske maskiert zur Überprüfung einer jeweiligen Kombinations-Filtermaske auf Unpassierbarkeit verwendet werden. Soweit die Kombinations-Filtermasken anhand der Relevanz-Kennzeichner auf Passierbarkeit überprüft werden, ist es ebenfalls zweckmäßig, wenn auch diese mit der Vormaske maskiert zu der vorgenannten Überprüfung verwendet werden. Jedenfalls wird vorzugsweise von aufgrund der Maskierung mit der Vormaske gleichwertigen maskierten Irrelevanz-Kennzeichnern nur jeweils einer zur Überprüfung der jeweiligen Kombinations-Filtermaske auf Unpassierbarkeit verwendet beziehungsweise bei gleichwertigen maskierten Relevanz-Kennzeichnern nur jeweils einer zur Überprüfung der jeweiligen Kombinations-Filtermaske auf Passierbarkeit. Beispielsweise sind zwei Kennzeichner gleichlautend, wenn sie sich unmaskiert in ihrem niedrigstwertigen Bit unterscheiden, dieses jedoch bei der Maskierung entfällt. Jedenfalls werden auf die vorgenannte Weise Wiederholungen bei der Überprüfung einer Filtermaske vermieden.

Zwar ist es prinzipiell möglich, dass die ermittelten Kombinations-Filtermasken, gegebenenfalls auch beibehaltene Ausgangs-Filtermasken, unmittelbar nach deren erfindungsgemäßer Ermittlung einer Kommunikations-Einrichtung bereitgestellt werden. Zweckmäßigerweise ist jedoch vorgesehen, dass die Kombinations-Filtermasken und beibehaltene Ausgangs-Filtermasken nach mindestens einem vorbestimmten Kriterium sortiert und für die Kommunikations-Einrichtung bereitgestellt werden. Ein solches Kriterium ist beispielsweise die Häufigkeitswahrscheinlichkeit, nach der die den jeweiligen Kombinations-Filtermasken bzw. Ausgangs-Filtermasken zugeordneten Relevanz-Kennzeichner im Kommunikationsnetz übertragen werden. Die Kommunikations-Einrichtung ist somit in der Lage, sehr schnell die für sie relevanten Relevanz-Kennzeichner zu ermitteln, weil diese mit der oder den vorne in der Filtermaskenliste stehenden Filtermasken ermittelbar sind.

Wie bereits ai den vorgenannten Beispielen angedeutet, sind die Irrelevanz-Kennzeichner, die Ausgangs-Filtermasken und die Relevanz-Kennzeichner Zeichenketten, insbesondere binäre Zeichenketten, und weisen jeweils gleiche Länge auf. Dabei ist es vorteilhaft, dass die Relevanz-Kennzeichner und die diesen jeweils zugeordneten Ausgangs-Filtermasken zunächst identische Zeichenketten sind. Es versteht sich, dass auch andere Zeichenketten, beispielsweise hexadezimale oder alpha-numerische Zeichenketten, als Kennzeichner und/oder Filtermasken denkbar sind. Ferner kann auch eine Ausgangs-Filtermaske bereits mehreren Relevanz-Kennzeichnern zugeordnet sein und beispielsweise sogenannte "Don't-Care"-Stellen aufweisen.

Prinzipiell können die vorgenannten Kennzeichner beliebige Angaben in einer jeweiligen Nachricht sein. Zweckmäßigerweise sind sie jedoch Adressangaben, insbesondere Ziel- und/oder Quelladressangaben, oder dienen als Inhalts-Kennzeichner für eine Nachricht.

Als Kommunikationsnetz kommt prinzipiell jedes beliebige Broadcast-Netzwerk in Frage, bei dem Nachrichten unspezifisch versendet und von mehreren Empfängern empfangen werden können. Als vorteilhaft erweist sich jedoch insbesondere die Anwendung der Erfindung für ein Bussystem, insbesondere ein CAN-Bussystem oder ein LIN-Bussystem (CAN = Controller Area Network, LIN = Local Interconnect Network).

Jedenfalls ist eine Kommunikations-Einrichtung, beispielsweise ein CAN-Busteilnehmer oder ein CAN-Schnittstellenbaustein, auch CAN-Controller genannt, anhand der Kombinations-Filtermasken, die durch das erfindungsgemäße Verfahren gebildet worden sind, sehr schnell und zuverlässig in der Lage, die jeweils relevanten Relevanz-Kennzeichner zu ermitteln und die jeweils irrelevanten Irrelevanz-Kennzeichner auszusondern.

Es versteht sich, dass das erfindungsgemäße Verfahren sowie das erfindungsgemäße Generierungsmodul "offline" eingesetzt werden kann, wobei dann die Kennzeichner den Kommunikations-Einrichtungen beispielsweise durch ein separates Entwicklungswerkzeug, z.B. einen das Generierungsmodul ausführenden Personal Computer, bereitgestellt werden. Das Generierungsmodul kann jedoch auch im "Online"-Betrieb betrieben werden, beispielsweise durch einen Kommunikationsteilnehmer, wenn während des laufenden Betriebes eines Kommunikationsnetzwerkes, beispielsweise eines CAN-Busses, sich an der Menge und/oder der Zusammensetzung der in dem jeweiligen Kommunikationsnetz verwendeten Kennzeichner etwas ändert und dementsprechend für die Kommunikationsteilnehmer neue und/oder modifizierte Filtermasken bereitgestellt werden müssen.

Im Folgenden werden die Erfindung und ihre Vorteile anhand von Ausführungsbeispielen erläutert. Es zeigen:
- Fig. 1: schematisch einen Bus 10 mit Kommunikations-Einrichtungen 11, 12, 13 sowie ein Entwicklungswerkzeug 17 mit einem Generierungsmodul 16,
- Fig. 2: eine schematische Darstellung einer Menge von Kennzeichnern ID mit für die Kommunikations-Einrichtung 11 relevanten Kennzeichnern RE und für diese irrelevante Irrelevanz-Kennzeichnern IR,
- Fig. 3a: eine Zuordnungstabelle von Relevanz-Kennzeichnern RE1-RE16 zu Ausgangs-Filtermasken 301-316,
- Fig. 3b: eine Fortentwicklung der Tabelle aus Fig. 3a, wobei teilweise aus den Ausgangs-Filtermasken 301-316 Kombinations-Filtermasken gebildet worden sind, die für alle zu betrachtenden Irrelevanz-Kennzeichner IR unpassierbar sind,
- Fig. 3c: eine Fortentwicklung der Tabelle aus Fig. 3b, bei der eine Kombinations-Filtermaske derart modifiziert ist, dass sie für einen Irrelevanz-Kennzeichner passierbar ist,
- Fig. 3d: eine Fortentwicklung der Tabelle aus Fig. 3c, bei der die Filtermasken nach der Vorkommenshäufigkeit der ihnen zugeordneten Relevanz-Kennzeichner sortiert sind,
- Fig. 4: eine Tabelle, bei der Filtermasken 401-404 nach der Vorkommenshäufigkeit von ihnen zugeordneten Relevanz-Kennzeichnern RE401-RE411 sortiert sind, und
- Fig. 5: eine Tabelle, bei der Filtermasken 501-504 nach der Vorkommenshäufigkeit von ihnen zugeordneten Relevanz-Kennzeichnern RE501-RE511 sortiert sind.

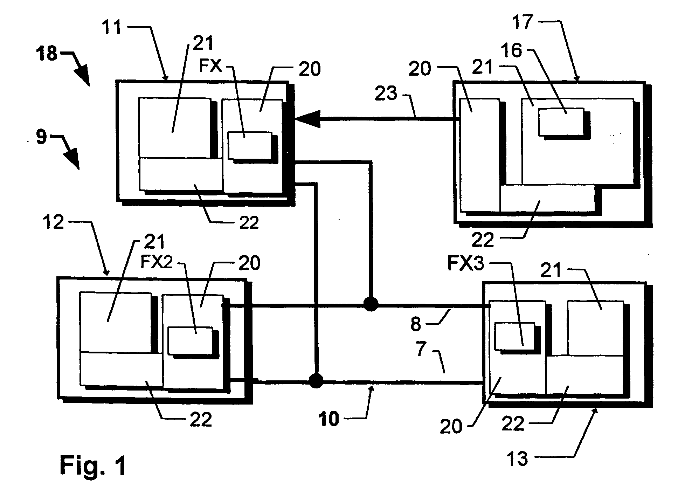

Fig. 1 zeigt einen ein Kommunikationsnetz 9 bildenden Bus 10, zum Beispiel ein CAN-Bus oder LIN-Bus, mit Busteilnehmer bildenden Kommunikations-Einrichtungen 11, 12, 13. Der Bus 10 ist an einem Kraftfahrzeug 18 angeordnet und weist Busleitungen 7, 8 auf, auf denen die Kommunikations-Einrichtungen 11, 12, 13 Nachrichten versenden und empfangen, wobei jede über den Bus 10 übermittelte Nachricht von allen an den Bus 10 angeschlossenen Busteilnehmern empfangen wird. Bei den Kommunikations-Einrichtungen 11, 12, 13 handelt es sich beispielsweise um zentrale oder lokale Baugruppensteuerungen, zum Beispiel zur Steuerung einer Heckleuchtenbaugruppe oder einer Abstandsmesseinrichtung des Kraftfahrzeugs 18.

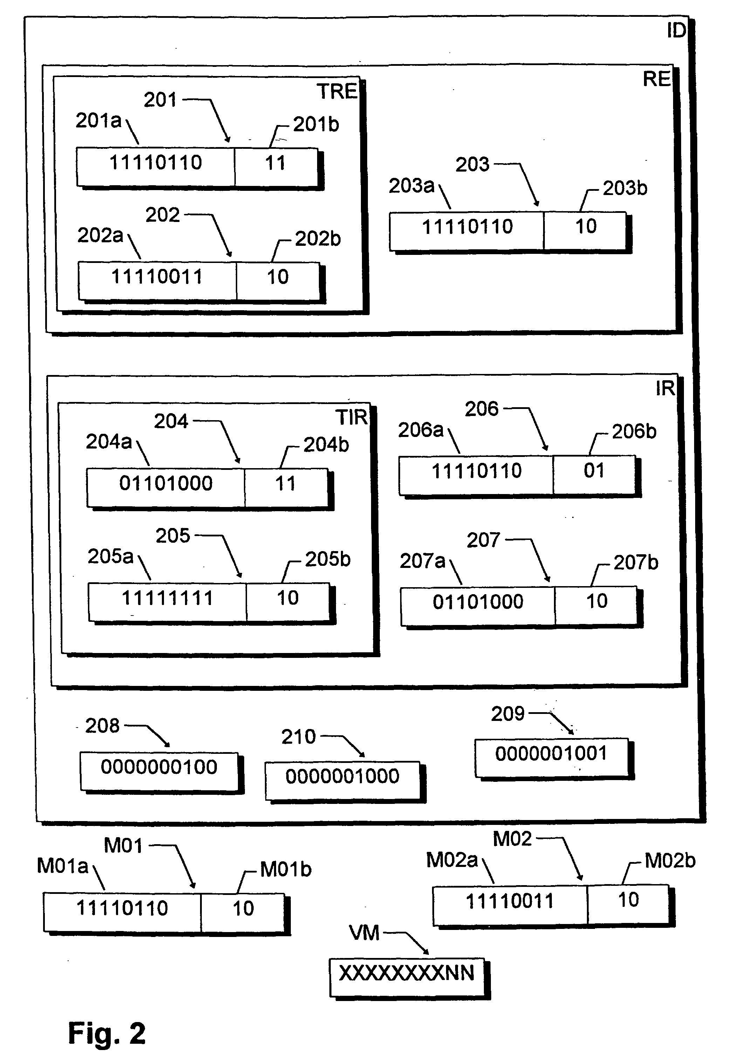

Die auf dem Bus 10 übermittelten Nachrichten enthalten Kennzeichner ID, die beispielsweise als Ziel- oder Quelladresse oder als Inhaltskennzeichner für den jeweiligen Inhalt der Nachricht dienen. Beispiele für solche Kennzeichner sind in Fig. 2 dargestellt. Bei den Kennzeichnern ID handelt es sich beispielsweise um binäre Zeichenketten mit 10 Bit, so dass die Menge der Kennzeichner ID theoretisch 2¹⁰ verschiedene Kennzeichner enthalten könnte, von denen in Figur 2 Kennzeichner 201 bis 210 exemplarisch dargestellt sind. Zur Kennzeichnung von Nachrichten werden bei dem Beispiel aus Figur 2 die Kennzeichner 201 bis 207 verwendet, während die Kennzeichner 208, 209, 210 und weitere, nicht gezeigte Kennzeichner nicht zur Kennzeichnung von Nachrichten verwendet werden.

Für die Kommunikations-Einrichtung 11 sind beispielsweise die Kennzeichner 201 bis 203 relevant und werden im Folgenden als Relevanz-Kennzeichner RE bezeichnet. Die Kennzeichner 204 bis 207 hingegen sind für die Kommunikations-Einrichtung 11 irrelevant und werden im Folgenden als Irrelevanz-Kennzeichner IR bezeichnet. Unter anderem zum Senden und Empfangen von Nachrichten auf dem Bus 10 sind in den Kommunikations-Einrichtungen 11, 12, 13 Sende- und Empfangsmodule 20, Speichermittel 21 sowie Steuermittel 22 vorgesehen. Die Steuermittel 22 sind beispielsweise Prozessoren oder Prozessoren-Anordnungen, mit denen Programmcode von Programm-Modulen ausgeführt werden kann, die in den Speichermitteln 21 gespeichert sind. Auch die Sende- und Empfangsmodule 20, bei denen es sich vorliegend beispielsweise um sogenannte CAN-Controller handelt, sind geeignet, Programmcode auszuführen.

Dieser kann jedoch vorliegend nicht dynamisch geladen werden, sondern ist dauerhaft in den Sende- und Empfangsmodulen 20 hinterlegt, beispielsweise in geeigneten Logikschaltungen und/oder als Software in einem Read Only Memory (ROM).

Ein bei dem Sende- und Empfangsmodul 20 der Kommunikations-Einrichtung 11 ankommender Kennzeichner ID wird von diesen mit Filtermasken FX verglichen, die in nicht dargestellten Registern abgelegt sind. Die Register umfassen vorliegend acht Speicherplätze mit jeweils 8 Bit. Wenn das jeweilige Bit-Muster eines Kennzeichners ID an den maßgeblichen Stellen mit einer der Filtermasken FX übereinstimmt, wird die den Kennzeichner ID enthaltende Nachricht an das jeweilige Steuermittel 22 weitergereicht, ansonsten stuft das Sende- und Empfangsmodul 20 den Kennzeichner ID als Irrelevanz-Kennzeichner IR ein und sondert die Nachricht aus.

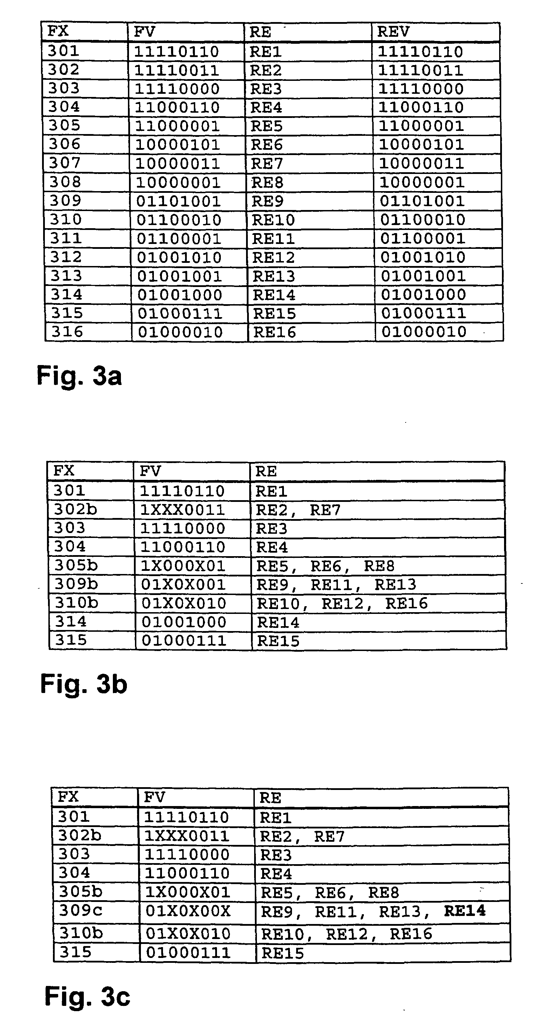

Im Folgenden wird davon ausgegangen, dass für das Kommunikationsmodul 11 die in den Fig. 3a bis 3d gezeigten Relevanz-Kennzeichner RE1 bis RE16 relevant sind. Die Relevanz-Kennzeichner RE1 bis RE16, die je 8 Bit enthalten, können mittels einer später noch erläuterten Vorgehensweise aus den in Figur 2 gezeigten Relevanz-Kennzeichnern 201 bis 203 sowie weiteren für die Kommunikations-Einrichtung 11 relevanten, nicht gezeigten Relevanz-Kennzeichnern mit je 10 Bit gebildet werden.

Die Relevanz-Kennzeichner RE1 bis RE16 weisen Werte REV auf, die in einer gleichnamigen Spalte "REV" in den Tabellen der Figuren 3a-3d angegeben sind. Den Relevanz-Kennzeichnern RE1 bis RE16 sind Ausgangs-Filtermasken 301 bis 316 zugeordnet, die für die Relevanz-Kennzeichner RE1 bis RE16 passierbar sind, jedoch nicht für nicht dargestellte Irrelevanz-Kennzeichner IR. Das Sende- und Empfangsmodul 20 überprüft dabei lediglich, ob ein binärer Wert eines empfangenen Kennzeichners ID mit einem der Werte FV der Filtermasken 301 bis 316 übereinstimmt.

Allerdings sind zur Ermittlung der Relevanz-Kennzeichner RE1 bis RE16 insgesamt sechzehn Ausgangs-Filtermasken 301 bis 316 erforderlich. Im Sende- und Empfangsmodul 20 sind jedoch lediglich acht Speicherplätze zur Speicherung von Filtermasken vorgesehen. Es ist also erforderlich, die Anzahl der Filtermasken FX zu verringern, so dass die acht Speicherplätze ausreichend sind und ferner alle Relevanz-Kennzeichner RE1 bis RE16 von dem Sende- und Empfangsmodul 20 zuverlässig ermittelbar sind.

Zur Ermittlung der hierfür geeigneten Filtermasken FX ist ein Generierungsmodul 16 vorgesehen, das von einem Entwicklungswerkzeug 17 ausgeführt wird. Bei dem Entwicklungswerkzeug 17 handelt es sich beispielsweise um einen Personal Computer oder eine Workstation mit einem oder mehreren, als Steuermittel 22 dienenden Prozessoren, mit Speichermitteln 21, die beispielsweise RAM-Bausteine, ein Festplattenlaufwerk oder dergleichen enthalten, sowie nicht dargestellten Ein- und Ausgabemitteln, beispielsweise einer Maus, einer Tastatur bzw. einem Bildschirm. Das Generierungsmodul 16 enthält Programmcode, der in den Speichermitteln 21 abgelegt und vom Steuermittel 22 ausgeführt wird. Prinzipiell ist es auch möglich, dass der Programmcode des Generierungsmoduls 16 beispielsweise von einer der Kommunikations-Einrichtungen 11 bis 13 oder von einem nicht dargestellten zentralen Steuerungsbaustein des Busses 10 ausgeführt wird. Im Ausführungsbeispiel generiert das Generierungsmodul 16 die für die Kommunikations-Einrichtungen 11, 12, 13 zur Ermittlung für die jeweils für diese relevanten Relevanz-Kennzeichner erforderlichen Filtermasken FX, FX2, FX3.

Am Beispiel von Filtermasken FX, die das Generierungsmodul 16 für die Kommunikations-Einrichtung 11 ermittelt und in diese mittels eines Sende- und Empfangsmoduls 20 über eine Download-Verbindung 23 lädt, soll im Folgenden das Generierungsverfahren des Generierungsmoduls 16 erläutert werden. Bei der Download-Verbindung 23 kann es sich z.B. um eine übliche serielle Verbindung, beispielsweise eine V24-Schnittstelle, handeln oder auch um eine Bus-Schnittstelle zum Bus 10.

Zunächst ermittelt das Generierungsmodul 16 die für die Kommunikations-Einrichtung relevanten Relevanz-Kennzeichner RE1 bis RE16. Dazu erfasst das Generierungsmodul 16 beispielsweise über eine Bedien-Oberfläche des Entwicklungswerkzeugs 17 die in Fig. 3a eingetragenen Kennzeichnerwerte REV der Relevanz-Kennzeichner RE1 bis RE16 oder liest die Kennzeichnerwerte REV beispielsweise aus einer Datei ein. Ferner ermittelt das Generierungsmodul 16 die für die Kommunikations-Einrichtung 11 irrelevanten Irrelevanz-Kennzeichner IR. Diese sind wesentlich zahlreicher als die Relevanz-Kennzeichner RE1 bis RE16 und daher in der Zeichnung nicht dargestellt. Beispielhaft sei lediglich ein Irrelevanz-Kennzeichner IR1 mit einem Wert "01101000" genannt, der in einer später noch erläuterten Weise z.B. aus dem Irrelevanz-Kennzeichner 204 (siehe Figur 2) gebildet werden kann.

In einem nächsten Schritt ermittelt das Generierungsmodul 16 für jeden der Relevanz-Kennzeichner RE1 bis RE16 eine Ausgangs-Filtermaske 301 bis 316, die für den jeweiligen Relevanz-Kennzeichner RE1 bis RE16 passierbar ist und für die Irrelevanz-Kennzeichner IR unpassierbar ist. In einer zweckmäßigen Vorgehensweise übernimmt das Generierungsmodul 16 die Kennzeichnerwerte REV für die Ausgangs-Filtermasken 301 bis 316. Prinzipiell ist es aber auch denkbar, dass die Werte FV der Ausgangs-Filtermasken 301 bis 316 von den Kennzeichnerwerten RV abweichen, beispielsweise wenn in einer Ausgangs-Filtermaske Frei- oder "Don't-care"-Stellen vorgesehen sind, um mehrere Relevanz-Kennzeichner zu erfassen.

Das Generierungsmodul 16 kombiniert dann nacheinander die Filtermasken 301 bis 316 miteinander und überprüft jeweils, ob die dabei ermittelte Kombinations-Filtermaske für die Irrelevanz-Kennzeichner IR unpassierbar ist. Eine Kombination der Filtermaske 301 mit einer oder mehreren der Filtermasken 302 bis 316 führt nicht zu einem solchen gewünschten Ergebnis. Anders verhält es sich mit der Filtermaske 302, die, mit der Filtermaske 307 kombiniert, eine Filtermaske 302b ergibt, die für alle Irrelevanz-Kennzeichner IR unpassierbar ist. Für die Relevanz-Kennzeichner RE2 und RE7 hingegen ist sie passierbar. Dazu sind drei Stellen der Kombinations-Filtermaske 302b sogenannte Frei- oder "Don't-care"-Stellen, nämlich die drei Stellen unterhalb des höchstwertigen Bits, die bei den der Kombinations-Filtermaske 302b zugrundeliegenden Filtermasken 302 und 307 voneinander abweichen.

Nach der Bildung der Kombinations-Filtermaske 302b kombiniert nun das Generierungsmodul 16 auch die Ausgangs-Filtermaske 303 mit einer der nachfolgenden Filtermasken 304 bis 315. Dies führt jeweils ebenso wenig zu einer für die Irrelevanz-Kennzeichner IR unpassierbaren Kombinations-Filtermaske wie eine Kombination der Ausgangs-Filtermaske 304 mit einer der nachfolgenden Filtermasken 305 bis 316. Jedenfalls entstehen Kombinations-Filtermasken, die für mindestens einen der Irrelevanz-Kennzeichner IR passierbar sind.

Bei der weiteren sequentiellen Kombination von Ausgangs-Filtermasken ermittelt das Generierungsmodul 16 aus den Filtermasken 305, 306 und 308 eine Kombinations-Filtermaske 305b, aus den Filtermasken 309, 311 und 313 eine Kombinations-Filtermaske 309b sowie aus den Filtermasken 310, 312 und 316 eine Kombinations-Filtermaske 310b. Die Ausgangs-Filtermasken 314 und 315 behält das Generierungsmodul 16 bei, da aus diesem gebildete Kombinations-Filtermasken nicht für alle Irrelevanz-Kennzeichner IR unpassierbar sind.

Für das somit erzielte Ergebnis, das in Fig. 3b dargestellt ist, sind insgesamt neun Speicherplätze für Filtermasken FX erforderlich, gewünscht waren jedoch acht Speicherplätze. Das Generierungsmodul 16 könnte nunmehr, was in einer vorteilhaften Variante der Erfindung vorgesehen ist, einen neuen Generierungsversuch starten und beispielsweise die Ausgangsreihenfolge der Filtermasken 301 bis 316 variieren. Dabei ist es möglich, wenn auch im Ausführungsbeispiel nicht dargestellt, dass das Generierungsmodul 16 acht oder weniger Filtermasken ermittelt, die für alle Irrelevanz-Kennzeichner nicht IR-passierbar sind.

Vorliegend jedoch geht das Generierungsmodul 16 aus Veranschaulichungsgründen anders vor. Das Generierungsmodul 16 kombiniert zu der Kombinations-Filtermaske 309b die Ausgangs-Filtermaske 314 und bildet somit eine Kombinations-Filtermaske 309c, die für alle Irrelevanz-Kennzeichner IR passierbar ist, mit Ausnahme des Irrelevanz-Kennzeichners IR1 ("01101000"). Das Generierungsmodul 16 hat somit insgesamt 8 Filtermasken FX generiert, wobei diese lediglich für einen einzigen Irrelevanz-Kennzeichner passierbar sind.

Anstatt der Kombination der Filtermaske 314 mit der Kombinations-Filtermaske 309b wären prinzipiell auch andere Kombinationen denkbar gewesen, wobei die dann gebildeten Kombinations-Filtermasken möglicherweise für mehrere Irrelevanz-Kennzeichner IR passierbar gewesen wären. Die jeweiligen Varianten werden von dem Generierungsmodul 16 jeweils überprüft und die jeweils beste, hier die Kombinations-Filtermaske 309c, ausgewählt.

Zudem berücksichtigt das Generierungsmodul 16 im vorliegenden Fall, dass der Irrelevanz-Kennzeichner IR1 vergleichsweise selten auf dem Bus 10 übertragen wird, beispielsweise weil der Relevanz-Kennzeichner RE14 ein Konfigurations- oder Parametrier-Telegramm betrifft.

Die Filtermasken FX gemäß Fig. 3c könnten nun in der gezeigten Reihenfolge an die Kommunikations-Einrichtung 11 gesendet werden. Vorliegend jedoch optimiert das Generierungsmodul 16 die Reihenfolge der Filtermasken FX dahingehend, dass diejenigen der Filtermasken 301, 302b, 303, 304, 305b, 309c, 310b, 315 am Anfang der Liste stehen, die auf dem Bus 10 häufig übertragene Relevanz-Kennzeichner RE1 bis RE16 betreffen. Die Liste der Kennzeichner FX wird demnach von den Filtermasken 305b, 310b, 309c angeführt, die jeweils drei Relevanz-Kennzeichnern zugeordnet sind. Unmittelbar auf diese Filtermasken folgt die Filtermaske 302b, die zwei Relevanz-Kennzeichner betrifft, und nachfolgend sind die Filtermasken 301, 303, 304, 315 angeführt, die jeweils nur einen Relevanz-Kennzeichner betreffen.

Bei der vorgenannten Reihenfolge wird zugrunde gelegt, dass die Kennzeichner RE1 bis RE16 mit im Wesentlichen jeweils identischer Übertragungswahrscheinlichkeit auf dem Bus 10 übertragen werden. Es ist aber auch denkbar, dass beispielsweise der Relevanz-Kennzeichner RE4 verhältnismäßig häufig auf dem Bus 10 übertragen wird, so dass die ihm zugeordnete Filtermaske 304 an den Anfang der Liste der Filtermasken FX gestellt werden müsste.

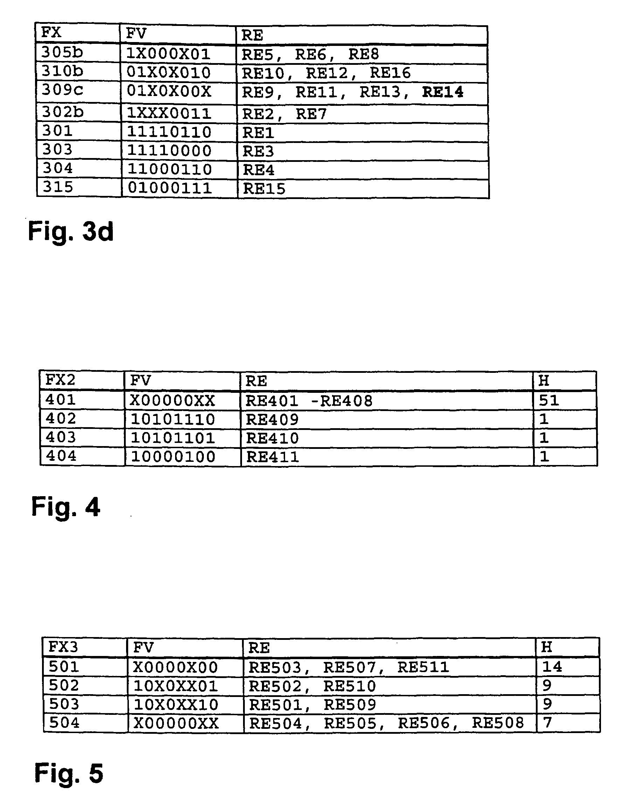

Für die Kommunikations-Einrichtungen 12 und 13 erzeugt das Generierungsmodul 16 in der erläuterten Weise Filtermasken FX2 bzw. FX3 (Figuren 4 und 5). Für die Kommunikations-Einrichtung 12 sind Relevanz-Kennzeichner RE401 bis RE411 relevant. Die Relevanz-Kennzeichner RE401 bis RE408 sind einer Kombinations-Filtermaske 401 zugeordnet und werden auf dem Bus 10 sehr häufig übertragen. Sie haben daher einen Häufigkeits-Indikator H = 51. Dagegen werden die Relevanz-Kennzeichner RE409 bis RE411 nur mit einem Häufigkeits-Indikator H = 1 auf dem Bus 10 übertragen. Daher ist bei den Filtermasken FX2 die Filtermaske 401 vorangestellt, während die den Relevanz-Kennzeichnern 409 bis 411 zugeordneten Filtermasken 402 bis 404 nachrangig angeordnet sind. Gemäß der Tabelle aus Fig. 5 sind auch die Filtermasken 501 bis 504 nach der Häufigkeitswahrscheinlichkeit der diesen jeweils zugrunde liegenden Relevanz-Kennzeichnern RE501 bis RE511 angeordnet. Obwohl die Filtermaske 504 insgesamt vier Relevanz-Kennzeichnern RE504, RE505, RE506, RE508 zugeordnet und für diese passierbar ist, trägt sie lediglich den Häufigkeits-Indikator H = 7 und ist demnach an das Ende der Tabelle gestellt, wohingegen die Filtermaske 501, die drei Relevanz-Kennzeichnern RE503, RE507, RE511 zugeordnet ist, am Anfang der Tabelle steht, weil die genannten Relevanz-Kennzeichner auf dem Bus 10 verhältnismäßig häufig übertragen werden und daher die Filtermaske 501 einen Häufigkeits-Indikator H = 14 aufweist.

Bei den seitherigen Ausführungsbeispielen wurde davon ausgegangen, dass die Filterbreite der Filtermasken FX, FX2, FX3 mit der Breite der tatsächlich auf dem Bus 10 übertragenen Kennzeichner übereinstimmt, im konkreten Fall 8 Bit beträgt. Nachfolgend wird jedoch davon ausgegangen, dass die auf dem Bus 10 übertragenen Nachrichten nicht 8 Bit lange Kennzeichner enthalten, sondern 10 Bit lange, wie in Figur 2 dargestellt. Die Register der Sende- und Empfangsmodule 20 stellen nach wie vor Speicherplätze mit 8 Bit zur Speicherung von Filtermasken FX , FX2, FX3 zur Verfügung.

Auch die Menge der Irrelevanz-Kennzeichner IR ist in Fig. 2 aus Übersichtlichkeitsgründen nur unvollständig dargestellt. Lediglich beispielhaft sind Kennzeichner 208 bis 210 gezeigt, die für weitere, auf dem Bus 10 nicht verwendete Kennzeichner stehen.

Die für die Kommunikations-Einrichtung 11 relevanten Relevanz-Kennzeichner RE mit den exemplarisch dargestellten Relevanz-Kennzeichnern 201, 202 und 203 sowie die für sie irrelevanten Irrelevanz-Kennzeichner IR mit den exemplarisch dargestellten Irrelevanz-Kennzeichnern 204 bis 207 werden vom Generierungsmodul 16 mit einer Vormaske VM maskiert, wobei die jeweils niedrigstwertigen beiden Bits 201b bis 207b ausmaskiert werden. Übrig bleiben als maskierte Kennzeichner 201a bis 207a jeweils die acht höchstwertigen Bits der Ausgangs-Kennzeichner 201 bis 207. Die Kennzeichnerwerte der maskierten Relevanz-Kennzeichner 203a und 201a sind, wie man in Fig. 2 sieht, identisch und entsprechen jeweils dem Kennzeichnerwert des Kennzeichners RE1, wohingegen die maskierten Relevanz-Kennzeichner 201a und 202a unterschiedliche Kennzeichnerwerte aufweisen.

Ferner ermittelt das Generierungsmodul 16 für die Relevanz-Kennzeichner 201 bis 203 Ausgangs-Filtermasken M01 und M02, die ebenfalls mit der Vormaske VM maskiert werden, so dass maskierte Ausgangs-Filtermasken M01 und M02 mit jeweils 8 Bit entstehen. Die Filtermaskenwerte der maskierten Ausgangs-Filtermasken M01a und M02a entsprechen dem Binärcode der maskierten Relevanz-Filtermasken 201a bzw. 202a.

Die maskierte Ausgangs-Filtermaske M01a ist sowohl für den maskierten Relevanz-Kennzeichner 201a als auch für den maskierten Relevanz-Kennzeichner 203a passierbar, so dass die maskierte Ausgangs-Filtermaske M01a auch dem Relevanz-Kennzeichner 203 zugeordnet ist und bei einer eventuellen Überprüfung einer Kombinations-Filtermaske auf Passierbarkeit der Kennzeichner 203 nicht unbedingt betrachtet werden muss. Die demnach für Test- oder Überprüfungszwecke von Filtermasken zu beachtenden Relevanz-Kennzeichner 201 und 202 sind zur Veranschaulichung einer Menge TRE zugeordnet.

Auch hinsichtlich der Menge der Irrelevanz-Kennzeichner IR ergeben sich durch die Maskierung mit der Vormaske VM besondere Verhältnisse. Für die Überprüfung einer aus den maskierten Ausgangs-Filtermasken, beispielsweise den Ausgangs-Filtermasken M01a und M02a, gebildeten Kombinations-Filtermaske, die dieselbe Filterbreite wie die ihr jeweils zugrunde liegenden Ausgangs-Filtermasken aufweist, im konkreten Fall 8 Bit, sind im gezeigten Beispiel die Irrelevanz-Kennzeichner 204, 205 zu betrachten, die in einer Menge TIR zusammengefasst sind. Die Irrelevanz-Kennzeichner 206 und 207 hingegen werden für die Überprüfung einer Kombinations-Filtermaske nicht verwendet, weil zum einen der maskierte Irrelevanz-Kennzeichner 207a denselben Wert aufweist wie der maskierte Irrelevanz-Kennzeichner 204a, so dass es bei der Überprüfung einer zum Beispiel aus den maskierten Ausgangs-Filtermasken M01a und M02a gebildeten Kombinations-Filtermaske (z.B. Wert "11110XX1") genügt, den maskierten Irrelevanz-Kennzeichner 204a zu betrachten, dessen Wert dem des im Zusammenhang mit Fig. 3 erwähnten Irrelevanz-Kennzeichners IR1 entspricht. Zum andern weist durch die Maskierung mit der Vormaske VM der maskierte Irrelevanz-Kennzeichner 206a denselben Wert auf wie die maskierten Relevanz-Kennzeichner 201a, 203a. Daher ist die maskierte Ausgangs-Filtermaske M01 auch für den maskierten Irrelevanz-Kennzeichner 206a passierbar. Demnach ist auch eine aus den Ausgangs-Filtermasken M01, M02 gebildete Kombinations-Filtermaske für den maskierten Irrelevanz-Kennzeichner 206a passierbar und wird daher in einer zweckmäßigen Ausgestaltung der Erfindung vom Generierungsmodul 16 bei einer solchen Überprüfung auf Unpassierbarkeit einer Kombinations-Filtermaske nicht berücksichtigt.

Bei der Bildung von Kombinations-Filtermasken auf Basis von maskierten Ausgangs-Filtermasken kann das Generierungsmodul 16 im Wesentlichen so vorgehen, wie anhand der Fig. 3a bis 3d bereits erläutert. Wie erwähnt entspricht z.B. der ausmaskierte Relevanz-Kennzeichner 201a dem Relevanz-Kennzeichner RE1 und der ausmaskierte Relevanz-Kennzeichner 202a dem Relevanz-Kennzeichner RE2. Weitere, in der Menge TRE enthaltene Relevanz-Kennzeichner, die den Relevanz-Kennzeichnern RE3 bis RE16 zugeordnet sind, sind in Fig. 2 aus Gründen der Übersichtlichkeit nicht dargestellt. Von den bei der Überprüfung von Kombinationsfiltermasken vom dem Generierungsmodul 16 berücksichtigten ausmaskierten Irrelevanz-Kennzeichnern TIR ist im Zusammenhang mit Fig. 3a-3d lediglich der dem ausmaskierten Irrelevanz-Kennzeichner 204a entsprechende Irrelevanz-Kennzeichner IR1 erwähnt worden.

Es versteht sich, dass beliebige Kombinationen der in den Ansprüchen und in der Beschreibung angegebenen Maßnahmen sowie weitere Ausgestaltungen der Erfindung ohne weiteres möglich sind.

Beispielsweise könnte das Generierungsmodul 16 von einem Steuermittel 22 der Kommunikations-Einrichtungen 11 bis 13 ausgeführt werden, zum Beispiel dann, wenn sich an der Menge RE der für die jeweilige Kommunikations-Einrichtung 11, 12, 13 relevanten Relevanz-Kennzeichner etwas ändert.

Die Verwendung der Filtermasken FX, FX2, FX3 beschränkt sich nicht auf die Sende- und Empfangsmodule 20, bei denen die Filtermasken FX, FX2, FX3 durch Hardware oder durch Hardwarenahe Software ausgewertet werden. Auch in den Kommunikations-Einrichtungen 11, 12, 13 oder in deren jeweiliger Software vorgesehene Prüfmodule oder Prüfroutinen können auf Basis der erfindungsgemäß ermittelten Filtermasken effizient betrieben werden.

Zwar erweist sich die Erfindung im Zusammenhang mit Bussystemen, insbesondere CAN- oder LIN-Bussen, als sehr vorteilhaft. Sie ist jedoch auch auf dem Gebiet von anderen Kommunikationsnetzen, beispielsweise Funk-Netzen, vorteilhaft anwendbar.

## Patentansprüche

1. Verfahren zur Ermittlung von Filtermasken (FX, FX2, FX3) zur Relevanzprüfung von Kennzeichnern, die einer Kommunikations-Einrichtung (11, 12, 13) über ein Kommunikationsnetz (9) in Nachrichten übermittelbar sind, mit den Schritten:
- Ermitteln von für die Kommunikations-Einrichtung (11, 12, 13) relevanten Relevanz-Kennzeichnern (RE1-RE16; 201-203),
- Ermitteln von für die Kommunikations-Einrichtung (11, 12, 13) irrelevanten Irrelevanz-Kennzeichnern (IR, IR1; 204-207),
**gekennzeichnet durch** die Schritte:
- Ermitteln jeweils mindestens einer Ausgangs-Filtermaske (301-316; M01, M02) für jeden Relevanz-Kennzeichner (RE1-RE16; 201-203), die für den jeweiligen Relevanz-Kennzeichner (RE1-RE16; 201-203) passierbar und für die Irrelevanz-Kennzeichner (IR, IR1; 204-207) unpassierbar ist,
- Kombinieren von zumindest zwei Ausgangs-Filtermasken (301-316; M01, M02) zu einer Kombinations-Filtermaske (302b, 305b, 309b, 310b), die für die den jeweiligen Ausgangs-Filtermasken (301-316; M01, M02) zugeordneten Relevanz-Kennzeichner (RE1-RE16; 201-203) passierbar ist, und
- Überprüfen der Kombinations-Filtermaske (302b, 305b, 309b, 310b), wobei sie anstelle der ihr jeweils zugrundeliegenden Ausgangs-Filtermasken (301-316; M01, M02) beibehalten wird, wenn alle Irrelevanz-Kennzeichner (IR, IR1; 204-207) mit der Kombinations-Filtermaske (302b, 305b, 309b, 310b) ausmaskierbar sind, oder verworfen wird, wenn sie für wenigstens einen Irrelevanz-Kennzeichner (IR, IR1; 204-207) passierbar ist.

2. Verfahren nach Anspruch 1, **dadurch gekennzeichnet, dass** aus Ausgangs-Filtermasken (301-316; M01, M02) und/oder Kombinations-Filtermasken (302b, 305b, 309b, 310b) solange Kombinations-Filtermasken (302b, 305b, 309b, 310b) gebildet und nach einer Überprüfung mit den Irrelevanz-Kennzeichnern (IR, IR1; 204-207) beibehalten oder verworfen werden, bis mindestens ein vorbestimmtes Abbruchkriterium erreicht ist, insbesondere bis keine Kombinations-Filtermaske (302b, 305b, 309b, 310b) mehr gebildet werden kann, die für alle Irrelevanz-Kennzeichner (IR, IR1; 204-207) unpassierbar ist oder bis die Summe von Kombinations-Filtermasken (302b, 305b, 309b, 310b) und nicht durch solche ersetzten Ausgangs-Filtermasken (301-316; M01, M02) einen Vorgabewert erreicht.

3. Verfahren nach Anspruch 1 oder 2, **dadurch gekennzeichnet, dass** dann, wenn keine für alle Irrelevanz-Kennzeichner (IR, IR1; 204-207) unpassierbare Kombinations-Filtermaske (302b, 305b, 309b, 310b) gebildet werden kann, zumindest eine Kombinations-Filtermaske (309c) aus den Ausgangs-Filtermasken (301-316; M01, M02) und/oder den Kombinations-Filtermasken (302b, 305b, 309b, 310b) gebildet und an deren Stelle beibehalten wird, die für wenigstens einen Irrelevanz-Kennzeichner (IR, IR1; 204-207) passierbar ist.

4. Verfahren nach einem der vorhergehenden Ansprüche, **dadurch gekennzeichnet, dass** bei einer Auswahl von mindestens zwei, aus Ausgangs-Filtermasken (301-316; M01, M02) und/oder Kombinations-Filtermasken (302b, 305b, 309b, 310b) gebildeten und für wenigstens einen Irrelevanz-Kennzeichner (IR, IR1; 204-207) passierbaren Kombinations-Filtermasken (302b, 305b, 309b, 310b) diejenige Kombinations-Filtermaske (302b, 305b, 309b, 310b) ausgewählt und beibehalten wird, die für eine kleinere Anzahl von Irrelevanz-Kennzeichnern (IR, IR1; 204-207) passierbar ist und/oder die für Irrelevanz-Kennzeichner (IR, IR1; 204-207) passierbar ist, die mit einer geringen Häufigkeitswahrscheinlichkeit in dem Kommunikationsnetz übertragen werden.

5. Verfahren nach Anspruch 4, **dadurch gekennzeichnet, dass** für wenigstens einen Irrelevanz-Kennzeichner (IR, IR1; 204-207) passierbare Kombinations-Filtermasken (302b, 305b, 309b, 310b) solange gebildet und beibehalten werden, bis die Summe von Kombinations-Filtermasken (302b, 305b, 309b, 310b) und nicht durch Kombinations-Filtermasken (302b, 305b, 309b, 310b) ersetzten Ausgangs-Filtermasken (301-316; M01, M02) einen Vorgabewert erreicht.

6. Verfahren nach einem der vorhergehenden Ansprüche, **dadurch gekennzeichnet, dass** die Ausgangs-Filtermasken (301-316; M01, M02) in eine Sequenz eingruppiert werden, dass die Filtermasken der Sequenz schrittweise mit den ihnen in der Sequenz jeweils nachfolgenden Filtermasken zu Kombinations-Filtermasken (302b, 305b, 309b, 310b) kombiniert werden und dass die jeweilige Kombinations-Filtermaske (302b, 305b, 309b, 310b) anstelle der ihnen jeweils zugrundeliegenden Filtermaske beibehalten wird, wenn sie für alle Irrelevanz-Kennzeichner (IR, IR1; 204-207) unpassierbar ist.

7. Verfahren nach Anspruch 6, **dadurch gekennzeichnet, dass** vor der Bildung der Kombinations-Filtermasken (302b, 305b, 309b, 310b) die Ausgangs-Reihenfolge der Ausgangs-Filtermasken (301-316; M01, M02) in der Sequenz verändert wird und dass bei einer Auswahl unterschiedlicher Ausgangs-Reihenfolgen eine Ausgangs-Reihenfolge nach einem vorbestimmten Kriterium, insbesondere nach der auf Basis der jeweiligen Ausgangs-Reihenfolge erzielbaren Gesamtzahl von Kombinations-Filtermasken (302b, 305b, 309b, 310b) und nicht durch solche ersetzten Ausgangs-Filtermasken (301-316; M01, M02), ausgewählt wird.

8. Verfahren nach einem der vorhergehenden Ansprüche, **dadurch gekennzeichnet, dass** die Ausgangs-Filtermasken (301-316; M01, M02) mit einer Vormaske (VM) zu maskierten Ausgangs-Filtermasken (M01a, M02a) maskiert werden, wobei eine maskierte Ausgangs-Filtermaske (M01a, M02a) mehreren Relevanz-Kennzeichnern (RE1-RE16; 201-203) zugeordnet und für diese passierbar sein kann und wobei eine maskierte Ausgangs-Filtermaske (M01, M02) für einen oder mehrere Irrelevanz-Kennzeichner (IR, IR1; 204-207) passierbar sein kann, dass zur Ermittlung der Kombinations-Filtermasken (302b, 305b, 309b, 310b) die maskierten Ausgangs-Filtermasken verwendet werden und dass zur Überprüfung auf Unpassierbarkeit der Kombinations-Filtermasken (302b, 305b, 309b, 310b) vorzugsweise nur diejenigen Irrelevanz-Kennzeichner (204, 205) verwendet werden, die anhand der der jeweiligen Kombinations-Filtermaske (302b, 305b, 309b, 310b) zugrundeliegenden maskierten Ausgangs-Filtermasken (M01a, M02a) ausfilterbar sind.

9. Verfahren nach Anspruch 8, **dadurch gekennzeichnet, dass** die jeweiligen Irrelevanz-Kennzeichner (IR, IR1; 204-207) mit der Vormaske (VM) maskiert zur Überprüfung einer jeweiligen Kombinations-Filtermaske (302b, 305b, 309b, 310b) auf Unpassierbarkeit verwendet werden, wobei vorzugsweise von aufgrund der Maskierung mit der Vormaske (VM) gleichwertigen maskierten Irrelevanz-Kennzeichnern (204, 207) nur jeweils einer zur Überprüfung der jeweiligen Kombinations-Filtermaske (302b, 305b, 309b, 310b) auf Unpassierbarkeit verwendet wird.

10. Verfahren nach einem der vorhergehenden Ansprüche, **dadurch gekennzeichnet, dass** die Kombinations-Filtermasken (302b, 305b, 309b, 310b) und beibehaltene Ausgangs-Filtermasken (301-316; M01, M02) nach mindestens einem vorbestimmten Kriterium, insbesondere nach der Häufigkeitswahrscheinlichkeit, nach der die den jeweiligen Kombinations-Filtermasken (302b, 305b, 309b, 310b) bzw. Ausgangs-Filtermasken zugeordneten Relevanz-Kennzeichner (RE1-RE16; 201-203) im Kommunikationsnetz übertragen werden, sortiert und für die Kommunikations-Einrichtung (11, 12, 13) bereitgestellt werden.

11. Verfahren nach einem der vorhergehenden Ansprüche, **dadurch gekennzeichnet, dass** die Irrelevanz-Kennzeichner (IR, IR1; 204-207), die Ausgangs-Filtermasken (301-316; M01, M02) und die Relevanz-Kennzeichner (RE1-RE16; 201-203) Zeichenketten, insbesondere binäre Zeichenketten, gleicher Länge sind und dass insbesondere die Relevanz-Kennzeichner (RE1-RE16; 201-203) und die diesen jeweils zugeordneten Ausgangs-Filtermasken (301-316; M01, M02) durch identische Zeichenketten gebildet werden.

12. Verfahren nach einem der vorhergehenden Ansprüche, **dadurch gekennzeichnet, dass** die Kennzeichner für eine Adressangabe, insbesondere eine Quell- und/oder Zieladresse, einer jeweiligen Nachricht und/oder als ein Inhaltskennzeichner für einen Inhalt der jeweiligen Nachricht vorgesehen sind.

13. Verfahren nach einem der vorhergehenden Ansprüche, **dadurch gekennzeichnet, dass** als Kommunikationsnetz (9) ein Broadcast-Netzwerk und/oder ein Bus-System, insbesondere ein CAN-Bussystem oder ein LIN-Bussystem, vorgesehen ist.

14. Kommunikations-Einrichtung (11, 12, 13), insbesondere CAN-Busteilnehmer oder CAN-Schnittstellenbaustein, zur Relevanzprüfung von Kennzeichnern anhand von Kombinations-Filtermasken (302b, 305b, 309b, 310b), die anhand des Verfahrens nach einem der vorhergehenden Ansprüche gebildet worden sind.

15. Generierungsmodul zur Ermittlung von Filtermasken (FX, FX2, FX3) zur Relevanzprüfung von Kennzeichnern, die einer Kommunikations-Einrichtung (11, 12, 13) über ein Kommunikationsnetz (9) in Nachrichten übermittelbar sind, mit Mitteln zur Ausführung der Schritte:
- Ermitteln von für die Kommunikations-Einrichtung (11, 12, 13) relevanten Relevanz-Kennzeichnern (RE1-RE16; 201-203),
- Ermitteln von für die Kommunikations-Einrichtung (11, 12, 13) irrelevanten Irrelevanz-Kennzeichnern (IR, IR1; 204-207),
- Ermitteln jeweils mindestens einer Ausgangs-Filtermaske (301-316; M01, M02) für jeden Relevanz-Kennzeichner (RE1-RE16; 201-203), die für den jeweiligen Relevanz-Kennzeichner (RE1-RE16; 201-203) passierbar und für die Irrelevanz-Kennzeichner (IR, IR1; 204-207) unpassierbar ist,
- Kombinieren von zumindest zwei Ausgangs-Filtermasken (301-316; M01, M02) zu einer Kombinations-Filtermaske (302b, 305b, 309b, 310b), die für die den jeweiligen Ausgangs-Filtermasken (301-316; M01, M02) zugeordneten Relevanz-Kennzeichner (RE1-RE16; 201-203) passierbar ist, und
- Überprüfen der Kombinations-Filtermaske (302b, 305b, 309b, 310b), wobei sie anstelle der ihr jeweils zugrundeliegenden Ausgangs-Filtermasken (301-316; M01, M02) beibehalten wird, wenn alle Irrelevanz-Kennzeichner (IR, IR1; 204-207) mit der Kombinations-Filtermaske (302b, 305b, 309b, 310b) ausmaskierbar sind, oder verworfen wird, wenn sie für wenigstens einen Irrelevanz-Kennzeichner (IR, IR1; 204-207) passierbar ist.

16. Generierungsmodul nach Anspruch 15, **dadurch gekennzeichnet, dass** es Programmcode enthält, der von einem Steuermittel eines Kraftfahrzeugs oder eines Entwicklungswerkzeugs oder einer Kommunikations-Einrichtung (11, 12, 13) ausgeführt werden kann.

17. Kraftfahrzeug oder Entwicklungswerkzeug, insbesondere Personal Computer oder Workstation oder Programmierwerkzeug, oder Kommunikations-Einrichtung (11, 12, 13), insbesondere CAN-Busteilnehmer oder CAN-Schnittstellenbaustein, mit einem Generierungsmodul nach Anspruch 15 oder 16.

## Claims

1. Method for the determination of filter masks (FX, FX2, FX3) for the relevance checking of qualifiers which may be transmitted in messages to a communications device (11, 12, 13) over a communications network (9), containing the steps:
- determination of relevance qualifiers (RE1-RE16; 210-203) relevant to the communications device (11, 12, 13),
- determination of irrelevance qualifiers (IR, IR1; 204-207) irrelevant to the communications device (11, 12, 13),
**characterised by** the steps:
- determination in each case of at least one initial filter mask (301-316; M01, M02) for each relevance qualifier (RE1-RE16; 210-203), which is passable for the relevance qualifier (RE1-RE16; 210-203) concerned and impassable for the irrelevance qualifiers (IR, IR1; 204-207),
- combination of at least two initial filter masks (301-316; M01, M02) into one combination filter mask (302b, 305b, 309b, 310b) which is passable for the relevance qualifiers (RE1-RE16; 210-203) assigned to the respective initial filter masks (301-316; M01, M02), and
- checking of the combination filter mask (302b, 305b, 309b, 310b), wherein it is retained instead of the respective initial filter masks (301-316; M01, M02) on which it is based, if all irrelevance qualifiers (IR, IR1; 204-207) can be masked by the combination filter mask (302b, 305b, 309b, 310b), or rejected if it is passable for at least one irrelevance qualifier (IR, IR1; 204-207).

2. Method according to claim 1, **characterised in that**, from initial filter masks (301-316; M01, M02) and/or combination filter masks (302b, 305b, 309b, 310b), combination filter masks (302b, 305b, 309b, 310b) are formed and, after checking with the irrelevance qualifiers (IR, IR1; 204-207), are retained or rejected until at least one predetermined termination criterion is reached, in particular until no more combination filter masks (302b, 305b, 309b, 310b) can be formed which are impassable for all irrelevance qualifiers (IR, IR1; 204-207) or until the total of combination filter masks (302b, 305b, 309b, 310b), and not the initial filter masks (301-316; M01, M02) replaced by the former, reaches a preset value.

3. Method according to claim 1 or 2, **characterised in that**, if no combination filter masks (302b, 305b, 309b, 310b) which are impassable for all irrelevance qualifiers (IR, IR1; 204-207) can be formed, at least one combination filter mask (309c) which is passable for one or more irrelevance qualifiers (IR, IR1; 204-207) is formed from the initial filter masks (301-316; M01, M02) and/or the combination filter masks (302b, 305b, 309b, 310b) and retained in their place.

4. Method according to any of the preceding claims, **characterised in that**, in a selection of at least two combination filter masks (302b, 305b, 309b, 310b) formed from initial filter masks (301-316; M01, M02) and/or combination filter masks (302b, 305b, 309b, 310b) and passable for at least one irrelevance qualifier (IR, IR1; 204-207), that combination filter mask (302b, 305b, 309b, 310b) is selected and retained which is passable for a smaller number of irrelevance qualifiers (IR, IR1; 204-207) and/or is passable for irrelevance qualifiers (IR, IR1; 204-207) which transmit to the communication network with a low frequency probability.

5. Method according to claim 4, **characterised in that** combination filter masks (302b, 305b, 309b, 310b) passable for one or more irrelevance qualifiers (IR, IR1; 204-207) are formed and retained until the total of combination filter masks (302b, 305b, 309b, 310b) and initial filter masks (301-316; M01, M02) not replaced by combination filter masks (302b, 305b, 309b, 3 10b) reaches a preset value.

6. Method according to any of the preceding claims, **characterised in that** the initial filter masks (301-316; M01, M02) are grouped into a sequence, that the filter masks of the sequence are gradually combined with the next following filter masks in the sequence to form combination filter masks (302b, 305b, 309b, 310b), and that each combination filter mask (302b, 305b, 309b, 310b) is retained in place of the respective filter mask on which it is based, if it is impassable for all irrelevance qualifiers (IR, IR1; 204-207).

7. Method according to claim 6, **characterised in that**, before the formation of the combination filter masks (302b, 305b, 309b, 310b), the initial sequence of the initial filter masks (301-316; M01, M02) is changed, and that in selecting different initial sequences, an initial sequence is selected according to a predetermined criterion, in particular the total number of combination filter masks (302b, 305b, 309b, 310b) which may be obtained on the basis of the particular initial sequence, and not the initial filter masks (301-316; M01, M02) replaced by them.

8. Method according to any of the preceding claims, **characterised in that** the initial filter masks (301-316; M01, M02) are masked by a preliminary mask (VM) to masked initial filter masks (M01 a, M02a), wherein a masked initial filter mask (M01a, M02a) may be assigned several relevance qualifiers (RE1-RE16; 210-203) for which it may be passable, and wherein a masked initial filter mask (M01, M02) may be passable for one or more irrelevance qualifiers (IR, IR1; 204-207), that the masked initial filter masks are used to determine the combination filter masks (302b, 305b, 309b, 310b) and that, for checking the combination filter masks (302b, 305b, 309b, 310b) for impassability, preferably only those irrelevance qualifiers (204, 205) are used which can be filtered out with the aid of the masked initial filter masks (M01a, M02a) underlying the combination filter mask (302b, 305b, 309b, 310b) concerned.

9. Method according to claim 8, **characterised in that** the respective irrelevance qualifiers (IR, IR1; 204-207), masked by the preliminary mask (VM), are used to check the impassability of each combination filter mask (302b, 305b, 309b, 310b), wherein preferably on account of the masking by the preliminary mask (VM) of identical masked irrelevance qualifiers (204, 207), in each case only one is used for checking for impassability of the relevant combination filter mask (302b, 305b, 309b, 310b).

10. Method according to any of the preceding claims, **characterised in that** the combination filter masks (302b, 305b, 309b, 310b) and retained initial filter masks (301-316; M01, M02) are sorted and made ready for use by the communications device (11, 12, 13) according to a predetermined criterion, in particular according to the probability of the frequency with which the relevance qualifiers (RE1-RE16; 210-203) assigned to the respective combination filter masks (302b, 305b, 309b, 310b) and/or initial filter masks are transmitted in the communications network.

11. Method according to any of the preceding claims, **characterised in that** the irrelevance qualifiers (IR, IR1; 204-207), the initial filter masks (301-316; M01, M02) and the relevance qualifiers (RE1-RE16; 210-203) are character strings, in particular binary character strings, of identical length, and that in particular the relevance qualifiers (RE1-RE16; 210-203) and the initial filter masks (301-316; M01, M02) respectively assigned to them are formed by identical character strings.

12. Method according to any of the preceding claims, **characterised in that** the qualifiers are provided for address data, in particular a source and/or target address, a particular message and/or as a content qualifier for content of the particular message.

13. Method according to any of the preceding claims, **characterised in that** a broadcast network and/or a bus system, in particular a CAN bus system or an LIN bus system, are provided as the communications network (9).

14. Communications device (11, 12, 13), in particular a CAN bus subscriber or CAN interface module, for relevance checking of qualifiers with the aid of combination filter masks (302b, 305b, 309b, 310b) formed using the method according to any of the preceding claims.

15. Generation module for determining filter masks (FX, FX2, FX3) for the relevance checking of qualifiers which may be transmitted in messages to a communications device (11, 12, 13) over a communications network (9), with means of executing the steps:
- determination of relevance qualifiers (RE1-RE16; 210-203) relevant to the communications device (11, 12, 13),
- determination of irrelevance qualifiers (IR, IR1; 204-207) irrelevant to the communications device (11, 12, 13),
**characterised by** the steps:
- determination in each case of at least one initial filter mask (301-316; M01, M02) for each relevance qualifier (RE1-RE16; 210-203), which is passable for the relevance qualifier (RE1-RE16; 210-203) concerned and impassable for the irrelevance qualifier (IR, IR1; 204-207),
- combination of at least two initial filter masks (301-316; M01, M02) into one combination filter mask (302b, 305b, 309b, 310b) which is passable for the relevance qualifiers (RE1-RE16; 210-203) assigned to the respective initial filter masks (301-316; M01, M02), and
- checking of the combination filter mask (302b, 305b, 309b, 310b), wherein it is retained instead of the respective initial filter masks (301-316; M01, M02) on which it is based, if all irrelevance qualifiers (IR, IR1; 204-207) can be masked by the combination filter mask (302b, 305b, 309b, 310b), or rejected if it is passable for at least one irrelevance qualifier (IR, IR1; 204-207).

16. Generation module according to claim 15, **characterised in that** it contains program code which may be run by control means of a motor vehicle or a development vehicle or a communications device (11, 12, 13).

17. Motor vehicle or development vehicle, in particular a personal computer or workstation or programming tool or communications device (11, 12, 13), in particular a CAN bus subscriber or CAN interface module, with a generation module according to claim 15 or 16.

## Revendications

1. Procédé de détermination de masques filtrants (FX, FX2, FX3) pour la vérification de la pertinence d'identificateurs qui peuvent être transmis dans des informations, à un dispositif de communication (11, 12, 13), par un réseau de communication (9), comportant les étapes suivantes :
- détermination d'identificateurs de pertinence (RE1-RE16 ; 201-203) pertinents pour le dispositif de communication (11, 12, 13),
- détermination d'identificateurs de non-pertinence (IR, IR1 ; 204-207) non pertinents pour le dispositif de communication (11, 12, 13),
**caractérisé par** les étapes suivantes :
- détermination chaque fois d'au moins un masque filtrant de sortie (301-316 ; MO1, MO2) pour chaque identificateur de pertinence (RE1-RE16 ; 201-203), qui est passant pour l'identificateur de pertinence (RE1-RE16 ; 201-203) respectif et non passant pour l'identificateur de non-pertinence (IR, IR1 ; 204-207),
- combinaison d'au moins deux masques filtrants de sortie (301-316 ; MO1, MO2) en un masque filtrant de combinaison (302b, 305b, 309b, 310b) qui est passant pour les identificateurs de pertinence (RE1-RE16 ; 201-203) associés aux masques filtrants de sortie (301-316 ; MO1, MO2) respectifs, et
- vérification du masque filtrant de combinaison (302b, 305b, 309, 310b), lequel est conservé, à la place des masques filtrants de sortie (301-316 ; MO1, MO2) qui sont à la base de celui-ci dans chaque cas, si tous les identificateurs de non-pertinence (IR, IR1 ; 204-207) peuvent être masqués avec le masque filtrant de combinaison (302b, 305b, 309b, 310b), ou est rejeté s'il est passant pour au moins un identificateur de non-pertinence (IR, IR1 ; 204-207).

2. Procédé selon la revendication 1, **caractérisé en ce qu'**on forme à partir de masques filtrants de sortie (301-306 ; MO1, MO2) et/ou de masques filtrants de combinaison (302b, 305b, 309b, 310b), des masques filtrants de combinaison (302b, 305, 309b, 310b) et on les conserve ou les rejette après une vérification avec les identificateurs de non-pertinence (IR, IR1 ; 204-207), jusqu'à ce qu'au moins un critère d'interruption prédéterminé soit atteint, en particulier jusqu'à ce qu'aucun masque filtrant de combinaison (302b, 305b, 309b, 310b) ne puisse plus être formé qui est non passant pour tous les identificateurs de non-pertinence (IR, IR1 ; 204-207), ou jusqu'à ce que la somme de masques filtrants de combinaison (302b, 305b, 309b, 310b), et des masques filtrants de sortie (301-316 ; MO1, MO2) non remplacés par ceux-ci, atteigne une valeur prédéfinie.

3. Procédé selon la revendication 1 ou 2, **caractérisé en ce que** lorsqu'aucun masque filtrant de combinaison (302b, 305b, 309b, 310b) non passant pour tous les identificateurs de non-pertinence (IR, IR1 ; 204-207) ne peut être formé, au moins un masque filtrant de combinaison (309c) est formé à partir des masques filtrants de sortie (301-316 ; MO1, MO2) et/ou à partir des masques filtrants de combinaison (302b, 305b, 309b, 310b), et est conservé à leur place, lequel est passant pour au moins un identificateur de non-pertinence (IR, IR1 ; 204-207).

4. Procédé selon l'une des revendications précédentes, **caractérisé en ce que** dans le cas d'une sélection formée à partir de masques filtrants de sortie (301-316 ; MO1, MO2) et/ou à partir de masques filtrants de combinaison (302b, 305b, 309b, 310b) et passants pour au moins un identificateur de non-pertinence (IR, IR1 ; 204-207), on sélectionne et conserve le masque filtrant de combinaison (302b, 305b, 309b, 310b) qui est passant pour un nombre plus petit d'identificateurs de non-pertinence (IR, IR1 ; 204-207) et/ou qui est passant pour des identificateurs de non-pertinence (IR, IR1 ; 204-207) qui sont transmis dans le réseau de communication avec une basse probabilité de fréquence.

5. Procédé selon la revendication 4, **caractérisé en ce que** des masques filtrants de combinaison (302b, 305b, 309b, 310b), passants pour au moins un identificateur de non-pertinence (IR, IR1 ; 204-207), sont formés et conservés jusqu'à ce que la somme de masques filtrants de combinaison (302b, 305b, 309b, 310b) et de masques filtrants de sortie (301-316 ; MO1, MO2), non remplacés par des masques filtrants de combinaison (302b, 305b, 309b, 310b), atteigne une valeur prédéfinie.

6. Procédé selon l'une des revendications précédentes, **caractérisé en ce que** les masques filtrants de sortie (301-316 ; MO1, MO2) sont regroupés en une séquence, **en ce que** les masques filtrants de la séquence sont combinés pas à pas en masques filtrants de combinaison (302b, 305b, 309b, 310b), avec les masques filtrants leur faisant suite respectivement dans la séquence, et **en ce que** le masque filtrant de combinaison (302b, 305b, 309b, 310b) respectif est conservé à la place du masque filtrant qui est à la base de celui-ci, lorsqu'il est non passant pour tous les identificateurs de non-pertinence (IR, IR1 ; 204-207).

7. Procédé selon la revendication 6, **caractérisé en ce qu'**avant la formation des masques filtrants de combinaison (302b, 305b, 309b, 310b), l'ordre de sortie des masques filtrants de sortie (301-316 ; MO1, MO2) est modifié dans la séquence et **en ce que** dans le cas d'une sélection d'ordre de sortie différent, on sélectionne un ordre de sortie selon un critère prédéterminé, en particulier selon le nombre total de masques filtrants de combinaison (302b, 305b, 309b, 310b), qui peut être obtenu sur la base de l'ordre de sortie respectif, et de masques filtrants de sortie (301-316 ; MO1, MO2) non remplacés par ceux-ci.

8. Procédé selon l'une des revendications précédentes, **caractérisé en ce que** les masques filtrants de sortie (301-316 ; MO1, MO2) sont masqués avec un pré-masque (VM) en masques filtrants de sortie (MO1a, MO2a) masqués, un masque filtrant de sortie masqué (MO1a, MO2a) étant associé à plusieurs identificateurs de pertinence (RE1-RE16 ; 201-203) et pouvant être passant pour ceux-ci, et un masque filtrant de sortie masqué (MO1, MO2) pouvant être passant pour un ou plusieurs identificateurs de non-pertinence (IR, IR1 ; 204-207), **en ce que** pour déterminer les masques filtrants de combinaison (302b, 305b, 309b, 310b) on utilise les masques filtrants de sortie masqués et **en ce que** pour vérifier que les masques filtrants de combinaison (302b, 305b, 309b, 310b) ne sont pas passants, on utilise de préférence uniquement les identificateurs de non-pertinence (204, 205) qui peuvent être filtrés à l'aide des masques filtrants de sortie masqués (MO1a, MO2a) qui sont à la base du masque filtrant de combinaison (302b, 305b, 309b, 310b) respectif.

9. Procédé selon la revendication 8, **caractérisé en ce que** les identificateurs de pertinence (IR, IR1 ; 204-207) respectifs sont masqués avec le pré-masque (VM) pour vérifier un masque filtrant de combinaison (302, 305b, 309, 310b) respectif quant à son caractère non passant, et de préférence parmi les identificateurs de non-pertinence (204-207) masqués, équivalents sur la base du masquage avec le pré-masque (VM), un seul est utilisé dans chaque cas pour vérifier le caractère non passant du masque filtrant de combinaison (302b, 305b, 309b, 310b) respectif.

10. Procédé selon l'une des revendications précédentes, **caractérisé en ce que** les masques filtrants de combinaison (302b, 305b, 309b, 310b) et les masques filtrants de sortie (301-316 ; MO1, MO2) conservés sont triés et préparés pour le dispositif de communication (11, 12, 13), selon au moins un critère prédéterminé, en particulier selon la probabilité de fréquence suivant laquelle les identificateurs de pertinence (RE1-RE16 ; 201-203) associés aux masques filtrants de combinaison (302b, 305b, 309b, 310b) respectifs ou aux masques filtrants de sortie sont transmis dans le réseau de communication.

11. Procédé selon l'une des revendications précédentes, **caractérisé en ce que** les identificateurs de non-pertinence (IR, IR1 ; 204-207), les masques filtrants de sortie (301-316 ; MO1, MO2) et les identificateurs de pertinence (RE1-RE16 ; 201-203) sont des chaînes de caractères, en particulier des chaînes de caractères binaires, de même longueur, et **en ce qu'**en particulier les identificateurs de pertinence (RE1-RE16 ; 201-203) et les masques filtrants de sortie (301-316 ; MO1, MO2) associés respectivement à ceux-ci, sont formés par des chaînes de caractères identiques.

12. Procédé selon l'une des revendications précédentes, **caractérisé en ce que** les identificateurs sont prévus pour une indication d'adresse, en particulier une adresse source et/ou une adresse cible, d'une information respective et/ou comme un identificateur de contenu pour le contenu de l'information respective.

13. Procédé selon l'une des revendications précédentes, **caractérisé en ce qu'**il est prévu comme réseau de communication (9) un réseau radio et/ou un système de bus, en particulier un système de bus CAN ou un système de bus LIN.

14. Dispositif de communication (11, 12, 13), en particulier participant à un bus CAN ou composant d'interface CAN, pour la vérification de pertinence d'identificateurs à l'aide de masques filtrants de combinaison (302b, 305b, 309b, 310b) qui ont été formés à l'aide du procédé selon l'une des revendications précédentes.

15. Module de génération pour déterminer des masques filtrants (FX, FX2, FX3) pour la vérification de pertinence d'identificateurs qui peuvent être transmis dans des informations à un dispositif de communication (11, 12, 13) par un réseau de communication (9), comportant des moyens pour exécuter les étapes suivantes :
- détermination d'identificateurs de pertinence (RE1-RE16 ; 201-203) pertinents pour le dispositif de communication (11, 12, 13),
- détermination d'identificateurs de non-pertinence (IR, IR1 ; 204-207) non pertinents pour le dispositif de communication (11, 12, 13),
- détermination dans chaque cas d'au moins un masque filtrant de sortie (301-316 ; MO1, MO2) pour chaque identificateur de pertinence (RE1-RE16 ; 201-203) qui est passant pour l'identificateur de pertinence (RE1-RE16 ; 201-203) respectif et non passant pour l'identificateur de non-pertinence (IR, IR1 ; 204-207),
- combinaison d'au moins deux masques filtrants de sortie (301-316 ; MO1, MO2) en un masque filtrant de combinaison (302b, 305b, 309b, 310b) qui est passant pour les identificateurs de pertinence (RE1-RE16 ; 201-203) associés aux masques filtrants de sortie (301-316 ; MO1, MO2) respectifs, et
- vérification du masque filtrant de combinaison (302b, 305b, 309, 310b), lequel est conservé, à la place des masques filtrants de sortie (301-316 ; MO1, MO2) qui sont à la base de celui-ci dans chaque cas, si tous les identificateurs de non-pertinence (IR, IR1 ; 204-207) peuvent être masqués avec le masque filtrant de combinaison (302b, 305b, 309b, 310b), ou est rejeté s'il est passant pour au moins un identificateur de non-pertinence (IR, IR1 ; 20'-207).

16. Module de génération selon la revendication 15, **caractérisé en ce qu'**il contient un code de programme qui peut être exécuté par un moyen de commande d'un véhicule automobile ou d'un outil de développement ou d'un dispositif de communication (11, 12, 13).

17. Véhicule automobile ou outil de développement, en particulier ordinateur individuel ou poste de travail ou outil de programmation, ou dispositif de communication (11, 12, 13), en particulier participant à un bus CAN ou composant d'interface CAN, comportant un module de génération selon la revendication 15 ou 16.
